# EUROPEAN PATENT APPLICATION

(11) **EP 4 706 951 A1**
(43) Date of publication of application: **11.03.2026**
(21) Application number: 24382967.8
(22) Date of filing: 10.09.2024
(51) Int. Cl.: B32B 3/04, B32B 7/05, B32B 7/06, B32B 7/14, B32B 27/08, B32B 27/16, B32B 27/30, B32B 27/32

(54) **BAGS INCLUDING POLYETHYLENE**

(71) Applicant: Dow Global Technologies LLC, Midland, MI 48674 (US)
(72) Inventor: SAHU, Nrusingh, 43006 Tarragona (ES); BARRETO, Abraham, 43006 Tarragona (ES)
(74) Representative: Boult Wade Tennant LLP

(57) **Abstract**

Disclosed herein is a bag having an inside and an outside as well as first seal and a second seal. The first seal of the bag has a higher heat seal strength than the second seal of the bag such that the second seal can be more easily separated than the first seal. The bag can be used for flexible packaging and can be formed from polyethylene films having specific heat seal layers and polymers.

## Description

### FIELD

Embodiments of the present disclosure relate to bags, for example, for flexible packaging, and processes for making the same.

### INTRODUCTION

Flexible packaging includes bags (e.g., pouches) made from heat sealable films. The heat sealable films include layers with heat seal polymers on at least one face of the film. Typically, polymers such as polyethylene (PE), ethylene vinyl acetate (EVA), and polypropylene are employed in creating the heat seal layer of films. For example, a film may consist of a single layer made entirely from a heat seal polymer like polyethylene or EVA, functioning exclusively as the heat seal component. In other instances, films are constructed with multiple layers, where one external layer is the heat seal element composed of a heat seal polymer, while the remaining layers serve various purposes. These can include structural layers that provide physical robustness, barrier layers that restrict airflow and moisture penetration, print layers that enhance visual appeal and printability, and tie layers that join different layers together. Additionally, some films utilize solely polymer-based layers, whereas others incorporate non-polymer substances like paper or metallic elements. Films can be sealed together by pressing together the heat seal layer(s) of the films with heat and pressure for enough time to soften the heat seal polymer and fuse the faces together. In some cases, two heat seal films can be used to form a bag. In some cases, a single film can be folded and sealed to itself to form a bag. Common processes to make bags include form, fill and seal (FFS) packaging processes. In summary, the FFS packaging process typically comprises the following steps: 1. A heat seal film that has a heat seal layer on one face is unrolled off a roll and proceeds in a machine direction. 2. The film is folded to bring the outside edges together with the heat seal layers on each edge in contact with each other. The edges are pressed together with sufficient heat and pressure and time to weld them together forming a hollow tube with a seam running in the machine direction. The heat seal layer is on the inside of the tube. 3. A heated set of jaws pinch the tube transverse to the machine direction with sufficient heat and pressure and time to form a seal across the tube transverse to the machine direction. This forms a bag with an open end in the upstream direction. 4. The bag is filled with product from the open end. 5. A heated set of jaws pinch the open end of the bag with sufficient heat and pressure and time to form a seal across the tube transverse to the machine direction, closing the bag with the product trapped between the two seals. 5. The closed bag is cut from the end of the tube. The form, fill and seal systems can be vertical (VFFS) or horizontal (HFFS).

The known processes for forming bags having seals include a significant number of steps and coordination of material. Accordingly, it is desirable to identify efficient processes for making bags having seals.

### SUMMARY

A first aspect disclosed herein is a bag comprising two films. The bag has an inside and an outside. The bag has a first seal and a second seal. The bag comprises a first film and a second film, wherein the first film comprises a first heat seal layer and the second film comprises a second heat seal layer on the inside of the bag; the first heat seal layer comprises a first heat seal polymer and the second heat seal layer comprises a second heat seal polymer. Part of the first heat seal layer and second heat seal layer are sealed for the first seal having a heat seal strength of at least 20 N/15 mm. A third heat seal polymer is on the inside of the bag between the first film and second film for the second seal having a heat seal strength from 2 N/15 mm to 7 N/15 mm.

A second aspect disclosed herein is a bag that can be formed from a single film. The bag has an inside and an outside. The bag has a first seal and a second seal. The bag comprises a first film, wherein the film comprises a first heat seal layer comprising a first heat seal polymer; wherein part of the first heat seal layer is sealed to itself for the first seal having a heat seal strength of at least 20 N/15 mm; and wherein a third heat seal polymer is on the inside of the bag and the first heat seal layer for the second seal having a heat seal strength from 2 N/15 mm to 7 N/15 mm

A third aspect disclosed herein is a process for making a bag. The process to make a bag comprises: (a) providing a first heat seal film comprising a first heat seal layer comprising a first heat seal polymer and a second heat seal film comprising a second heat seal layer comprising a second heat seal polymer; (b) coating a section of the first heat seal layer and/or the second heat seal layer with a dispersion of a third heat seal polymer; (c) pressing an uncoated section of the first heat seal layer and/or the second heat seal layer for a selected heat and pressure for a selected time to form a first seal between the films having a heat seal strength of at least 20 N/15 mm; and pressing the section of the first heat seal layer and/or the second heat seal layer with the dispersion to form a second seal having a heat seal strength at least 2 N/15 to at most 7 N/15 mm.

### DETAILED DESCRIPTION

The term "polymer" as used herein means a polymeric compound prepared by polymerizing monomers, whether of the same or a different type. The term "polymer" as used herein embraces the terms "homopolymer," "copolymer," and "terpolymer" and includes polymer blends.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

As used herein, the terms "polyethylene" or "ethylene-based polymer" shall mean polymers comprising a majority amount (>50 mol %) of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); ethylene-based plastomers (POP) and ethylene-based elastomers (POE); Medium Density Polyethylene (MDPE); and High Density Polyethylene (HDPE).

As used herein, the terms "elastomer/plastomer" or ethylene-based plastomers (POP) and ethylene-based elastomers (POE) shall mean a substantially linear, or linear, ethylene/α-olefin copolymer containing homogeneous short-chain branching distribution comprising units derived from ethylene and units derived from at least one C₃-C₁₀ α-olefin comonomer, or at least one C₄-C₈ α-olefin comonomer, or at least one C₆-C₈ α-olefin comonomer. Polyethylene elastomers/plastomers have a density from 0.865 g/cm³, or 0.870 g/cm³, or 0.880 g/ cm³, or 0.890 g/ cm³ to 0.900 g/ cm³, or 0.902 g/ cm³, or 0.904 g/ cm³, or 0.909 g/ cm³, or 0.910 g/ cm³. Nonlimiting examples of polyethylene elastomers/plastomers include AFFINITY^{™} plastomers and elastomers (available from The Dow Chemical Company), EXACT^{™} plastomers (available from ExxonMobil Chemical), Tafmer (available from Mitsui), Nexlene^{™} (available from SK Chemicals Co.), and Lucene^{™} (available LG Chem Ltd.).

In some embodiments, the bag comprises at least 95 wt.%, at least 97 wt.% or at least 99 wt.% ethylene-based polymers, based on the total weight of the bag. In some embodiments, the bag is free of polymers other than ethylene-based polymers. In some embodiments, the first film and/or the first heat seal layer comprises at least 95 wt.%, at least 97 wt.% or at least 99 wt.% ethylene-based polymers, based on the total weight of the first film. In some embodiments, the first film is free of polymers other than ethylene-based polymers. In some embodiments, the second film and/or the second heat seal layer comprises at least 95 wt.%, at least 97 wt.% or at least 99 wt.% ethylene-based polymers, based on the total weight of the second film. In some embodiments, the third heat seal polymer is an ethylene-based polymer.

The term "bag" as used herein includes pouches and heat seal bags or pouches that can be used to carry or protect contents of the bag and that have an outside and inside.

A bag according to embodiments disclosed herein has a first seal and a second seal. A bag according to embodiments disclosed herein can be said to comprise a "frangible" seal and an "infrangible" seal. An "infrangible seal" as that phrase is used herein means the seal has a heat seal strength of at least 20 N/15 mm. A "frangible seal" as that phrase is used herein means the seal has a heat seal strength of 2 N/15 mm to 7 N/15 mm. The first seal of the bag according to embodiment herein has a heat seal strength of at least 20 N/15 mm, and so can be deemed an "infrangible seal" as that phase is used herein. The second seal of the bag according to embodiments disclosed herein has a heat seal strength of 2 N/15 mm to 7 N/15 mm, and so can be deemed a "frangible seal" as that phrase is used herein.

The bag and film(s) according to embodiments disclosed herein comprises heat seal layers and heat seal polymers. The phrase "heat seal polymer" and "heat seal layer" as disclosed herein means the polymer or layer has a heat seal initiation temperature of at least 80°C and at most 150°C. Heat seal initiation temperature and heat seal strength can be measured in accordance with the test method below. Examples of suitable heal seal polymers in the film include linear low density polyethylene (LLDPE), low density polyethylene (LDPE), ethylene vinyl acetate (EVA), plastomers, elastomers, polypropylene, polyacrylates, and polyvinylidene chloride.

The terms "first", "second", and "third" as used herein are used to describe different or distinct structures of the bag, including its films, layers, or polymers, and are not used to describe a sequence or order of the bag, including its films, layers, or polymers.

Generally speaking, the bag according to embodiments disclosed herein comprises both strong (infrangible) seal(s) and weak (frangible) seal(s). The frangible seal(s) can be strong enough that the packaging can be stored and transported without opening the frangible seal. However, the frangible seal can be weak enough that a consumer can readily open the frangible seal when desired, without bursting the infrangible seals in the package.

For example, an infrangible seal can form a large bag, and a frangible seal can divide the bag into two or more separate smaller chambers/compartments. The separate chambers can be filled with two different materials, such as two different liquids or a liquid and a powder. The frangible seal can hold the two materials separate during shipment and storage and can permit the consumer to burst the frangible seal and mix the two materials shortly before use, without bursting the rest of the bag. Alternatively, a frangible seal can close a bag and form an easy-opening closure at one end of a bag that has an infrangible seal holding the rest of the bag together.

The bag disclosed herein has an "inside" and an "outside." The "inside" of the bag is, for example, in contact with contents or materials held, contained, or protected in the bag whereas the "outside" of the bag is, for example, more directly exposed to the atmosphere surrounding the bag and not the contents of the bag. The bag according to embodiments disclosed herein can be formed from two or more films or from a single film. The heat seal layer(s) of the film(s) faces the inside of the bag.

### Bag Comprising Two Film Embodiment

A bag according to embodiments disclosed herein comprises a first film and a second film. In such embodiments, the first film comprises a first heat seal layer and the second film comprises a second heat seal layer on the inside of the bag. The first heat seal layer comprises a first heat seal polymer and the second heat seal layer comprises a second heat seal polymer. Part of the first heat seal layer of the first film is sealed with or to the second heat seal layer to form a first seal having a seal strength of at last 20 N/15 mm (i.e., an infrangible seal). For instance, the first heat seal layer of the first film and the second heat seal layer of the second film can be sealed along only their edges to form a pouch (i.e., a pouch is a type of bag).

A third heat seal polymer is on the inside of the bag and can be placed on the first heat seal layer or the second heat seal layer so that a second seal having a heat seal strength from 2 N/15 mm to 7 N/15 mm (i.e., frangible seal) can be formed between the first film and the second film. The third heat seal polymer can be placed on the inside of the bag on the first heat seal layer and/or the second heat seal layer by, for example, a film strip, extrusion coating, or other forms of coating or application known to those skilled in the art as described herein. In some embodiments, the third heat seal polymer is disposed on the surface of the first heat seal layer and/or second heat seal layer via a dispersion and extrusion coating as described herein.

In such embodiments, the first and second heat seal polymer is selected so that a first seal (i.e., infrangible seal, which has a seal strength of at least 20 N/15 mm) can be formed. The third heat seal polymer is also selected so that, for example, a coating can be applied, and a frangible seal can be formed having a heat seal strength of 2 N/15 mm to 7 N/15 mm.

### Bag Comprising Single Heat Seal Film Embodiment

In embodiments where the bag comprises a single heat seal film, the bag can be formed at least in part from the first heat seal film of the two film embodiment, where the first heat seal film is folded such that the first heat seal layer is on the inside of the bag and the first heat seal layer comprising the first heat seal polymer is sealed to itself in part to form the first seal having a seal strength of at least 20 N/15 mm. In such embodiments, the first heat seal film, first heat seal layer, and first heat seal layer can have the same properties as disclosed elsewhere herein. In such embodiments, the third heat seal polymer, as disclosed elsewhere herein, is placed or disposed on the first heat seal layer for a second seal having a heat seal strength from 2 N/15 mm to 7 N/15 mm. The third heat seal polymer according to the single film embodiments can be placed or disposed on the first heat seal layer via extrusion coating, film strip, or other methods known to those skilled in the art.

In such embodiments, the first heat seal polymer is selected so that a first seal (i.e., infrangible seal, which has a seal strength of at least 20 N/15 mm) can be formed. The third heat seal polymer is also selected so that, for example, a coating can be applied and a frangible seal is formed having a heat seal strength of 2 N/15 mm to 7 N/15 mm. In such embodiments, the bag does not comprise a second film comprising a second heat seal layer comprising a second heat seal polymer, and the first heat seal film and first heat seal layer is folded and sealed to itself.

### Polymers, Film(s) Structures, and Seals

In some embodiments, the first heat seal polymer comprises, consists essentially of, or consists of a linear low density polyethylene, an ultra low density polyethylene, a polyolefin elastomer, a polyolefin plastomer, an ethylene vinyl acetate copolymer, or combination thereof. Similarly, in some embodiments, the second heat seal polymer comprises, consists essentially of, or consists of a linear low density polyethylene, an ultra low density polyethylene, a polyolefin elastomer, a polyolefin plastomer, an ethylene vinyl acetate copolymer, or combination thereof. In some embodiments, the first heat seal polymer is the same type or grade of polymer as the second heat seal polymer. In other embodiments, the first heat seal polymer is a different type or grade than the second heat seal polymer. In some embodiments, the third heat seal polymer comprises, consists essentially of, or consists of an ethylene vinyl acetate copolymer. In some embodiments, the third heat seal polymer comprises, consists essentially of, or consists of an ionomer.

In some embodiments, the seal initiation temperature of the first, second, and/or third heat seal polymer is at least 80°C or at least 85°C or at least 90°C or at least 95°C or at least 100°C or at least 105°C or at least 110°C of at least 115°C or at least 120°C. In some embodiments, the seal initiation temperature of the first, second, and/or third heat seal polymer is at most 150°C or at most 145°C or at most 140°C of at most 135°C or at most 130°C.

In some embodiments, the first seal has a heat seal strength of at least 20 N/15 mm to at most 70 N/15 mm or 50 N/15 mm, or 50 N/15 mm, and the second seal has a heat seal strength of at least 5 N/15 mm to 6.5 N/15 mm. The first heat seal polymer and second heat seal polymer can be selected to form the first seal with selected sealing conditions of temperature, pressure, and residence time.

The third heat seal polymer can be selected so that a coating comprising the third seal polymer forms a second seal having a heat seal strength of 2 N/15 mm to 7 N/15 mm when sealed with selected sealing conditions of temperature, pressure, and residence time. In some embodiments, a third heat seal polymer is selected so that the second seal has a seal strength of at least 2.5 N/15 mm, when sealed with selected sealing conditions of temperature, pressure and residence time, or at least 3 N/15 mm or at least 3.5 N/15 mm or at least 4 N/15 mm or at least 4.5 N/15 mm or at least 5 N/15 mm. In some embodiments, the third heat seal polymer is selected so that the second seal has a heat seal strength of at most 6.8 N/15 mm, when sealed with selected sealing conditions of temperature, pressure and residence time, or at most 6.5 N/15 mm or at most 6.3 N/15 mm or at most 6.0 N/15 mm.

In some embodiments, the third heat seal polymer is a dispersion in an aqueous solvent. In other embodiments, the third heat seal polymer is a dispersion in a non-aqueous solvent. In such embodiments, the dispersion comprises at least 10 weight percent of the third heat seal polymer, or at least 20 weight percent or at least 30 weight percent or at least 35 weight percent or at least 40 weight percent or at least 42 weight percent or at least 45 weight percent. In some embodiments, the dispersion comprises at most 80 weight percent of the third heat seal polymer, or at most 70 weight percent or at most 65 weight percent or at most 60 weight percent or at most 55 weight percent or at most 53 weight percent or at most 50 weight percent.

In some embodiments, the dispersion is applied only to the first film in areas where the frangible seals are desired, and so only the first film receives a coating of third heat seal polymer. In some embodiments, the dispersion is applied to the heat seal layers on both the first and second film in areas where the frangible seals are desired, and so both the first and second film receive a coating of third heat seal polymer.

In some embodiments, the dispersion comprises the third heat seal polymer dispersed in a solvent. (The term "solvent" does not imply that the third heat seal polymer is dissolved in the solvent. The third heat seal polymer may form particles suspended or emulsified in the solvent.) In some embodiments, the solvent further contains a water miscible organic solvent such as ethanol or acetic acid.

In some embodiments, the third heat seal polymer is selected so that the frangible seal has a heat seal strength that is no more than 50 percent of the strength of the infrangible seal, or no more than 40 percent or no more than 35 percent or no more than 30 percent or no more than 25 percent or no more than 20 percent or no more than 15 percent. In some embodiments, the third heat seal polymer is selected so that the frangible seal has a strength that is at least 1 percent of the heat seal strength of the infrangible seal, or at least 5 percent, or at least 10 percent, or at least 15 percent, or at least 20 percent, or at least 25 percent.

In some embodiments, the third heat seal polymer is an ethylene vinyl acetate (EVA) copolymer. In some embodiments, the third heat seal polymer is a different polymer from the first and/or second heat seal polymer, so that an EVA dispersion can be used where the first and/or second heat seal film comprise an LLDPE or a non-EVA heat seal polymer.

Dispersions of EVA heat seal polymers are commercially sold under the ADCOTE^{™} trademark. Others can be made by known processes, such as by emulsion polymerization of ethylene and vinyl acetate monomers in the presence of nonionic or anionic surfactant and a free radical initiator.

In some embodiments, the third heat seal polymer is a heat seal ionomer. Ionomers are copolymers that contain pendant acid salt groups. In some embodiments, the ionomer is derived from a copolymer of ethylene with an unsaturated acid monomer such as acrylic acid or methacrylic acid. In some embodiments, the copolymer contains at least 2 weight percent repeating units derived from unsaturated acid monomer or at least 3 weight percent or at least 4 weight percent or at least 5 weight percent. In some embodiments, the copolymer comprises at most 20 weight percent repeating units derived from unsaturated acid monomer or at most 15 weight percent or at most 12 weight percent or at most 10 weight percent. The resulting polymer can be converted to an ionomer by reacting pendant acid groups on the polymer with a strong base such as an alkali-metal hydroxide. The resulting pendant metal carboxylate moieties on the polymer enable it to form a dispersion in an aqueous solvent. Ionomer heat seal polymers are commercially sold under the SURLYN^{™} trademark, and dispersions that contain these polymers are commercially sold under the ADCOTE^{™} trademark. Others can be made by known processes, as described above.

In some embodiments, the dispersion of the third heat seal polymer can be applied onto the heat seal layer of the first film in a pattern to form the desired frangible seal(s). The dispersion can be applied by known techniques, such as extrusion coating or gravure printing, spraying or brushing. In some embodiments, the dispersion is applied to the heat seal layer on both the first and second film. In some embodiments, the dispersion is applied only to the heat seal layer on the first film. After the dispersion is applied, it can be dried in place by known techniques, such as by subjecting to heat and/or flow of air or inert gas. The coated film(s) can contain a dried coating of the third heat seal polymer in the areas where a frangible seal is desired.

The frangible seal can be made by known processes. The film or two films can be pressed together in the area where the third heat seal polymer is located with a selected temperature and pressure and for selected time to soften the coated surface(s) and weld them together so that, after the weld cools, a frangible seal results.

In some embodiments, the first and/or second heat seal film is a monolayer film. For example, the first film can be a monolayer film consisting of the first heat seal layer comprising the first heat seal polymer. Likewise, the second film can be a monolayer film consisting of the second heat seal layer comprising the second heat seal polymer.

In some embodiments, the first and/or second heat seal film is a multilayer film or a laminate comprising the film and a substrate. The first and/or second heat seal film can, for example, be a laminate or multilayer film comprising the first heat seal layer comprising the first heat seal polymer, where the first heat seal layer is on the face of the film and inside of the bag. Other layers of a multilayer heat seal film may include, for example:
- Structural layers comprising polymers that provide desired strength to the film, such as high-density polyethylene (HDPE), low-density polyethylene (LDPE), linear low-density polyethylene (LLDPE), medium density polyethylene (MDPE), polypropylene homopolymer, random copolymer or block copolymer or polystyrene.
- Barrier layers comprising polymers that inhibit transmission of air, water and flavor elements through the film, such as ethylene vinyl alcohol (EVOH), polyamide or polyvinylidene chloride.
- Tie layers comprising polymers that will adhere incompatible layers of the film together. Many tie layers contain as block copolymers of polar and nonpolar polymers.

In some embodiments, the first heat seal film comprises a layer of paper coated with a layer of the first heat seal polymer to form the first heat seal layer. In some embodiment, the first heat seal film comprises a layer of metal coated with a layer of the first heat seal polymer to form the first heat seal layer. Processes to coat paper and metal with heat seal polymers are known, such as by extrusion coating or lamination. In some embodiments, the first and/or second heat seal film comprises a tie layer between the heat seal layer(s) and the metal or paper layer, to improve adhesion between the layers.

Polymer layers in the heat seal film(s) optionally further contain additives. Examples of common additives include antistatic agents, color enhancers, dyes, lubricants, fillers, pigments, primary antioxidants, secondary antioxidants, processing aids, UV stabilizers, nucleators, slip agents such as erucamide, antiblock agents such as talc, and combinations thereof. In some embodiments, additives make up no more than 5 weight percent of the film or no more than 4 weight percent or no more than 3 weight percent or no more than 2 weight percent or no more than 1 weight percent, based on the total weight of such polymer. In some embodiments, additives make up essentially 0 weight percent of the polymer composition. In some embodiments, layers that will form the inside surface of a bag comprise only additives that are approved for food contact by applicable regulatory authorities.

The thickness of the heat seal film(s) can vary depending on its intended use and properties. In some embodiments, the heat seal film(s) is at least 50 microns thick, or at least 90 microns thick, or at least 110 microns, or at least 130 microns. In some embodiments, the heat seal film(s) is at most 350 microns thick or at most 300 microns thick or at most 250 microns or at most 200 microns.

In some embodiments, the first heat seal polymer comprises a single heat seal polymer. In some embodiments, the first heat seal polymer comprises a blend of two or more heat seal polymers. In the descriptions of this application, references to a polymer also include polymer blends.

In some embodiments, the first heat seal polymer comprises, consists essentially of, or consist of LLDPE. In some embodiments, the second heat seal polymer comprises, consists essentially of, or consist of LLDPE. In some embodiments, the LLDPE has a density of at least 0.850 g/cc, or at least 0.910 g/cc, or at least 0.912 g/cc. In some embodiments, the LLDPE has a density of at most 0.918 g/cc, or at most 0.916 g/cc. A desirable melt index for the LLDPE varies depending on how the film is made. In some blown films, the LLDPE has a melt index (I2) of at least 0.1 dg/min or at least 0.3 dg/min or at least 0.5 dg/min or at least 0.7 dg/min. In some blown films, the LLDPE has a melt index (I2) of at most 2.0 dg/min or at most 1.8 dg/min or at most 1.5 dg/min. Too high of a melt index can cause instability in the bubble in a blown film line, but that concern applies less to cast films. In some cast films, the LLDPE has a melt index (I2) of at least 1.0 dg/min, or at least 1.3 dg/min, or at least 1.5 dg/min. In some cast films, the LLDPE has a melt index (I2) of at most 8.0 dg/min, or at most 7.0 dg/min, or at most 6.0 dg/min, or at most 5.0 dg/min, or at most 4.0 dg/min. In some embodiments, the first heat seal polymer or second heat seal polymer comprises a polyethylene plastomer or elastomer. In some embodiments, the plastomer has a density of at least 0.870 g/cc, or at least 0.880 g/cc, or at least 0.890 g/cc, or at least 0.900 g/cc. In some embodiments, the plastomer has a density of at most 0.910 g/cc, or at most 0.908 g/cc, or at most 0.906 g/cc. Embodiments for the melt index of the plastomer are as described for LLDPE.

Suitable LLDPE polymers are commercially available, such as under the Dow^{™} LLDPE and ELITE^{™} trademarks. Suitable plastomers are commercially available, such as under the AFFINITY^{™} and VERSIFY^{™} trademarks. Other LLDPE and plastomers can be made by copolymerization of ethylene monomer with from 2 to 20 weight percent of an α-olefin comonomer in the presence of a catalyst. Common comonomers include 1-butene, 1-hexene and 1-octene. Common catalysts include Ziegler-Natta catalysts, metallocene catalysts and other single site catalysts. Suitable catalysts in each category are commercially available. The polymerization may take place in a solution polymerization, slurry polymerization and fluid bed polymerization. Suitable equipment to carry out the polymerization is commercially-available with instructions for its use. Polymer molecular weight can be controlled by selection of catalyst, selection of polymerization conditions and adding chain terminators and transfer agents, such as hydrogen. The density of LLDPE can be lowered by increasing quantity and molecular weight of comonomers. The melt index of LLDPE can be raised by reducing molecular weight.

In some embodiments, the first heat seal polymer comprises, consists essentially of, or consists of an ethylene vinyl acetate (EVA) copolymer. In some embodiments, the second heat seal polymer comprises, consists essentially of, or consists of an ethylene vinyl acetate (EVA) copolymer. In some embodiments, the EVA contains at least 10 weight percent repeating units derived from vinyl acetate, or at least 12 weight percent or at least 14 weight percent or at least 16 weight percent or at least 18 weight percent. In some embodiments, the EVA contains at most 26 weight percent repeating units derived from vinyl acetate, or at most 24 weight percent or at most 22 weight percent or at most 20 weight percent or at most 18 weight percent. In some embodiments, the EVA has a melting point of at least 75°C or at least 80°C or at least 82°C or at least 84°C or at least 86°C or at least 88°C. In some embodiments, the EVA has a melting point of at most 100°C or at most 98°C or at most 96°C or at most 94°C or at most 92°C or at most 90°C or at most 88°C. Embodiments for the melt index of the EVA are as described for LLDPE.

Suitable EVA is commercially available, such as under the ELVAX^{™} trademark. Other EVA polymers can be made by known processes such as by high pressure polymerization of ethylene and vinyl acetate polymers. The polymerization process may be carried out in a tubular reactor at pressures of about 3500 bar.

Suitable heat seal films are commercially available. Others can be made be made by known processes such as by extrusion of heat seal polymers, or by coextrusion of heat seal polymers with other polymers. As previously described, heat seal films that contain paper or metal layers can be made by extrusion coating or lamination of heat seal polymers directly or indirectly only a paper or metal sheet substrate.

In some embodiments, the surface of a heat seal layer on a heat seal film is modified, such as by chemical or corona treatment. Corona treatment subjects the surface to a discharge of electrons. Corona treatment increases the surface energy of the heat seal polymer, which improves its adhesion to inks and coatings. Suitable equipment for corona treatment is available with instructions for its use.

### Process of Making Bag

A process to make a bag is also disclosed. The process comprises (a) providing a first heat seal film comprising a first heat seal layer comprising a first heat seal polymer and a second heat seal film comprising a second heat seal layer comprising a second heat seal polymer, wherein part of the heat seal layers of the films are sealed for a first seal having a heat seal strength of at least 20 N/15 mm when heat sealed under a selected temperature, pressure and time; (b) coating a section of the first heat seal layer and/or the second heat seal layer with a dispersion of a third heat seal polymer; (c) pressing an uncoated section of the first heat seal layer and/or the second heat seal layer with a selected heat and pressure for a selected time to form one or more infrangible seals between the films with a strength of at least 20 N/15 mm; and (d) pressing the section of the first heat seal layer and/or the second heat seal layer with the aqueous dispersion for a second seal having a heat seal strength from 2 N/15. In some embodiments, the process includes wherein the first seal and the second seal are formed by applying a temperature from 80°C to 150°C and a pressure from 150 kPa to 750 kPa for a time from 0.2 seconds to 2 seconds. In some embodiments, the selected temperature used to form the second seal is no more than 5°C or no more than 15°C or no more than 25°C or no more than 35°C or no more than 45°C different from the selected temperature used to form the infrangible seals, the selected pressure used to form the frangible seals is no more than 10 percent or no more than 20 percent or no more than 30 percent different from the selected pressure used to form the infrangible seals, and the selected time that heat and pressure are applied to form the frangible seals is no more than 10 percent or no more than 20 percent or no more than 30 percent more than 40 percent or no more than 50 percent different from the selected time that heat and pressure are applied to form the infrangible seals. In some embodiments, only the heat seal layer on the first film is coated with the third heat seal polymer. In some embodiments, the heat seal layers on both the first and the second film are coated with the second heat seal polymer in step (b). In some embodiments, the heat seal layer on the first heat seal film is corona treated before coating with the third heat seal polymer.

As is readily understood by the skilled person, in the process of this invention, a first heat seal film and second heat seal film are heat sealed together to form a bag that comprises both frangible and infrangible seals. The infrangible seal(s) are made by known processes. The two film can be pressed together in the area where an infrangible seal is desired with a selected temperature and pressure and for selected time to soften the heat seal layers on each film and weld them together so that, after the weld cools, an infrangible seal results.

The selected temperature to form the infrangible seals in the bag is typically at least the seal initiation temperature of the first heat seal polymer or second heat seal polymer. In some embodiments, the selected temperature to form the infrangible seals is at least 80°C or at least 105°C or at least 110°C of at least 115°C or at least 120°C. In some embodiments, the selected temperature to form the infrangible seals in the bag is at most 150°C or at most 145°C or at most 140°C of at most 135°C or at most 130°C.

In some embodiments, the selected pressure to form the infrangible seals in the bag is at least 100 KPa or at least 150 KPa or at least 200 KPa . In some embodiments, the selected pressure to form the infrangible seals in the bag is at most 1000 KPa or at most 750 KPa or at most 500 KPa.

In some embodiments, the selected time that pressure and temperature are maintained on the film (residence time) to form the infrangible seals in the bag is at least 0.2 sec or at least 0.3 sec or at least 0.4 sec or at least 0.5 sec. In some embodiments, the selected residence time to form the infrangible seals in the bag is at most 3 sec or at most 2 sec or at most 1 sec.

To make the frangible seals, an aqueous dispersion comprising the third heat seal polymer can be applied to the first or second heat seal layer in the areas where a frangible seal is desired, and the dispersion can be dried to deposit a coating of the third heat seal polymer on the heat seal layer where a frangible seal is desired.

The selected temperature to form the frangible seal is typically at least the seal initiation temperature of the third heat seal polymer. In some embodiments, the selected temperature to form the frangible seal is at least 100°C or at least 105°C or at least 110°C of at least 115°C or at least 120°C. In some embodiments, the selected temperature to form the frangible seal in the bag is at most 150°C or at most 145°C or at most 140°C of at most 135°C or at most 130°C.

In some embodiments, the selected pressure to form the frangible seal is at least 100 KPa or at least 150 KPa or at least 200 KPa. In some embodiments, the selected pressure to form the frangible seal in the bag is at most 1000 KPa or at most 750 KPa or at most 500 KPa.

In some embodiments, the selected time that pressure and temperature are maintained on the film (residence time) to form the frangible seal is at least 0.2 sec or at least 0.3 sec or at least 0.4 sec or at least 0.5 sec. In some embodiments, the selected residence time to form the frangible seal in the bag is at most 3 sec or at most 2 sec or at most 1 sec.

In some embodiments, the frangible and infrangible seals are sealed at similar temperature and pressure for a similar time. In some embodiments, the temperature used to form the frangible seals is no more than 10°C different from the temperature used to form the infrangible seals, or no more than 8°C or no more than 6°C or no more than 4°C or no more than 2°C. In some embodiments, the pressure used to form the frangible seal is no more than 20 percent different from the pressure used to form the infrangible seal, or no more than 10 percent or no more than 5 percent. In some embodiments, the time that heat and pressure are applied to form the frangible seal is no more than 20 percent longer or shorter than the time that heat and pressure are applied to form the infrangible seal, or no more than 15 percent longer or shorter or no more than 10 percent longer or shorter or no more than 5 percent longer or shorter. In some embodiments, any difference in temperature, pressure and time used to form the frangible and infrangible heat seals results from ordinary variation in control of the heat sealing equipment, rather than from deliberate differentiation of sealing conditions.

The process makes a bag. In some embodiments, the bag comprises two films heat sealed together by both frangible and infrangible heat seals. In some embodiments, a frangible seal is along an edge of the bag and forms a means to open the bag. In some embodiments, a frangible seal is inside the bag and divides the bag into two separate compartments. For example:
In some embodiments, the bag comprises:
1. an infrangible seal along the lengths of the bag, which form the film of the bag into a tube;
2. an infrangible seal transverse to the lengths of the bag, which seal the ends of the tube and close the bag; and
3. a frangible seal(s) along the length of the bag, which divides the bag into two or more separate chambers.

In some embodiments, the bag comprises:
1. an infrangible seal along the length of the bag, which form the film of the bag into a tube;
2. an infrangible seal transverse to the lengths of the bag, which seal the ends of the tube and close the bag; and
3. a frangible seal(s) transverse to the length of the bag, which divides the bag into two or more separate chambers.

In some embodiments, the bag comprises:
1. an infrangible seal along the lengths of the bag, which form the film of the bag into a tube;
2. an infrangible seal transverse to the length of the bag, which seals one ends of the tube; and
3. a frangible seal at the end of the bag opposite to the infrangible seal which closes the bag but provides an easier seal to open than the infrangible seals.

The infrangible seal can be formed by welding the heat seal layers of each film directly to each other in some embodiments. On the other hand, the frangible seal can comprise a layer of the third heat seal polymer between the heat seal layers of the films in some embodiments. In some embodiments, the layer of the third heat seal polymer is formed by a coating of the third heat seal polymer on the first film welding onto the second heat seal layer. In some embodiments, the layer of the third heat seal polymer is formed by coatings of the third heat seal polymer on both the first and second film welding to each other.

The frangible seal(s) have lower seal strength than the infrangible seal(s). In some embodiments, the frangible seal has a heat seal strength of at least 2.5 N/15 mm or at least 3 N/15 mm or at least 3.5 N/15 mm or at least 4 N/15 mm or at least 4.5 N/15 mm or at least 5 N/15 mm. In some embodiments, the frangible seal has a seal strength of at most 7.0 N/15 mm or at most 6.8 N/15 mm or at most 6.5 N/15 mm or at most 6.3 N/15 mm or at most 6.0 N/15 mm. In some embodiments, the frangible seals fail primarily by a peeling mode. The bag can comprise one or more frangible seals and one or more infrangible seals.

In some embodiments, the infrangible seal(s) have a heat seal strength of at least 22 N/15 mm, or at least 24 N/15 mm, or at least 26 N/15 mm, or at least 28 N/15 mm or at least 30 N/15 mm or at least 32 N/15 mm. In some embodiments, the infrangible seal(s) have a heat seal strength of at most 100 N/15 mm, at most 75 N/15 mm, at most 55 N/15 mm or at most 50 N/15 mm or at most 45 N/15 mm or at most 42 N/15 mm or at most 40 N/15 mm or at most 38 N/15 mm. In some embodiments, the infrangible seal(s) fail primarily by a tearing mode.

In some embodiments, the frangible seal has a heat seal strength that is no more than 50 percent of the strength of the infrangible seal, or no more than 40 percent or no more than 35 percent or no more than 30 percent or no more than 25 percent or no more than 20 percent or no more than 15 percent. In some embodiments, the frangible seal has a heat seal strength that is at least 1 percent of the strength of the infrangible seal, or at least 5 percent or at least 10 percent or at least 15 percent or at least 20 percent or at least 25.

For example, in some embodiments, squeezing, kneading or twisting the bag can open the frangible seals without opening the infrangible seals. In some embodiments, pulling apart the two films that are held together by the frangible seal can separate the frangible seal without separating the infrangible seals.

### ASPECTS:

ASPECT 1 - A bag having an inside and outside and a first seal and a second seal, wherein the bag comprises a first film and a second film, wherein the first film comprises a first heat seal layer and the second film comprises a second heat seal layer on the inside of the bag; the first heat seal layer comprises a first heat seal polymer and the second heat seal layer comprises a second heat seal polymer; and wherein part of the first heat seal layer and second heat seal layer are sealed for the first seal having a heat seal strength of at least 20 N/15 mm; and wherein a third heat seal polymer is on the inside of the bag between the first film and second film for the second seal having a heat seal strength from 2 N/15 mm to 7 N/15 mm.
ASPECT 2- The bag according to the first aspect, wherein the first heat seal polymer and the second heat seal polymer each have a seal initiation temperature from 105°C to 150°C.
ASPECT 3 - The bag of any one of the first or second aspect, wherein the first heat seal polymer comprises a linear low-density polyethylene or a polyolefin plastomer.
ASPECT 4 - The bag of any one of the first, second, or third aspect, wherein the third heat seal polymer comprises an ethylene vinyl acetate copolymer.
ASPECT 5 - The bag of any one of the first, second, third, or fourth aspect, wherein the third heat seal polymer comprises ionomer.
ASPECT 6 - The bag of any one of the first, second, third, fourth or fifth aspect, wherein the first heat seal polymer comprises an ethylene vinyl acetate copolymer.
ASPECT 7 - The bag of any one of the first, second, third, fourth, fifth, or sixth aspect, wherein the first heat seal polymer comprises an ionomer.
ASPECT 8 - The bag of any one of the first, second, third, fourth, fifth, sixth, or seventh aspect, wherein the first seal has a seal strength from 24 N/15 mm to 50 N/15 mm and the second seal has a strength from 2.5 N/15 mm to 6.5 N/15 mm.
ASPECT 9 - The bag of any one of the first, second, third, fourth, fifth, sixth, seventh, or eighth aspect, wherein the second seal has a heat seal strength that is from 10 percent to 30 percent of the heat seal strength of the first seal.
ASPECT 10 - A bag having an inside and outside and a first seal and a second seal, wherein the bag comprises a first film, wherein the film comprises a first heat seal layer comprising a first heat seal polymer; wherein part of the first heat seal layer is sealed to itself for the first seal having a heat seal strength of at least 20 N/15 mm; and wherein a third heat seal polymer is on the inside of the bag and the first heat seal layer for the second seal having a heat seal strength from 2 N/15 mm to 7 N/15 mm.
ASPECT 11 - A process to make a bag comprising:
   (a) providing a first heat seal film comprising a first heat seal layer comprising a first heat seal polymer and a second heat seal film comprising a second heat seal layer comprising a second heat seal polymer;
   (b) coating a section of the first heat seal layer and/or the second heat seal layer with a dispersion of a third heat seal polymer;
   (c) pressing an uncoated section of the first heat seal layer and/or the second heat seal layer for a selected heat and pressure for a selected time to form a first seal between the films having a heat seal strength of at least 20 N/15 mm; and
   (d) pressing the section of the first heat seal layer and/or the second heat seal layer with the dispersion to form a second seal having a heat seal strength at least 2 N/15 to at most 7 N/15 mm.
ASPECT 12 - The process of aspect 11, wherein both the first seal and the second seal are formed by selecting a temperature from 80°C to 150°C and a pressure from 150 kPa to 750 kPa for a time from 0.2 seconds to 2 seconds.
ASPECT 13 - The process of aspect 12, wherein the selected temperature used to form the second seal is no more than 5°C different from the selected temperature used to form the first seal, the selected pressure used to form the first seal is no more than 20 percent different from the selected pressure used to form the second seal, and the selected time that heat and pressure are applied to form the first seal is no more than 20 percent different from the selected time that heat and pressure are applied to form the second seal. ASPECT 14 - The process of aspect 12, wherein only the heat seal layer on the first film is coated with the third heat seal polymer in step (b).
ASPECT 15 - The process of aspect 12, wherein the heat seal layers on both the first and the second film are coated with the third heat seal polymer in step (b).
ASPECT 16 - The process of aspect 12, wherein the heat seal layer on the first film is corona treated before coating with the second heat seal polymer in step (b).

### Test Methods

Unless stated otherwise, measurements listed in this application are made using the following test methods:

| Parameter | Test |
|---|---|
| Density | ASTM D792, Method B. |
| Melt Index (I2) | ASTM D1238 at 190°C, 2.16 kg. |
| Melting Temperature of EVA | ASTM D3418 |
| Heat Seal Initiation Temperature | ASTM F2029 |
| Heat Seal Strength | ASTM F88 |

### Examples

The following examples illustrate specific embodiments of the invention, but do not limit the broadest scope of the invention.

The materials in Table 1 are used for the Examples:

**Table 1**

| **Designation** | **Name** |
|---|---|
| Structural PE | ELITE^{™} AT 6900 Enhance Polyethylene |
| Outer PE 1 | DOW^{™} LDPE 310E Low Density Polyethylene |
| Outer PE 2 | ELITE^{™} 5400G Enhance Polyethylene |
| Heat seal PE 1 | ELITE^{™} 5401G Enhance Polyethylene |
| Heat seal PE 2 | A metallocene catalyzed polyolefin plastomer having a density of 0.904 g/cc and a melt index (I2) of 1.0 dg/min, which contains 3200 ppm antiblock additive and 1600 ppm slip agent. |
| EVA Film | Ethylene vinyl acetate heat sealable monolayer film P109000FN00, acquired from TicinoPlast S.R.L. Density: 0.920 g/cc. Thickness 40 microns. |
| EVA Heat seal Dispersion | ADCOTE 37R345-PS aqueous dispersion. Contains ethylene vinyl acetate interpolymer with a solids content of 45 weight percent. The polymer in this dispersion corresponds to a third heat seal polymer. |
| Ionomer Heat seal Dispersion | ROBOND HS37-220 aqueous dispersion. Contains ethylene ionomer copolymer with a solids content of 31 weight percent. The polymer in this dispersion corresponds to a third heat seal polymer. |

Heat sealable Films: A heat seal five layer film is coextruded with the contents set out in Table 2. The film is extruded by blown film extrusion on a Macchi Coex Flex 5 system with a die diameter of 300mm and a blow-up ratio of 2.54. Each layer is 12 microns thick, and the entire film is 60 microns thick. The blown film is 1.2 meters wide. The layers are listed in Table 2, and percentages are weight percent:

**Table 2**

| | |
|---|---|
| Heat seal Layer | 40% Heat seal PE 1 and 60% Heat seal PE 2 |
| Inner Layer 1 | 100% Structural PE |
| Inner Layer 2 | 100% Structural PE |
| Inner Layer 3 | 100% Structural PE |
| Outer Layer | 80 % Outer PE 1 and 20% Outer PE 2 |

The heat sealable EVA Film (monolayer) listed in Table 1 is acquired. The EVA polymer in the film corresponds to a first heat seal polymer or second heat seal polymer described in this application.

### Sealing:

A Nordmechanica LABO-Combi laminator unit has capabilities to heat seal two layers of film together, to apply a coating to one or both layers of film before heat sealing, and to corona treat the film before applying the coating and heat sealing.

Combinations of the heat sealable films are heat sealed together using the Nordmechanica laminator, as shown in Table 3. In each case, two film samples are layered on each other with their heat seal layers in contact.
- As shown in Table 3, the heat seal layers on some of the films are corona treated before they are heat sealed, and some are not corona treated. Corona treatment is carried out at an intensity of 1kW/hr.
- As shown in Table 3, in some cases, part of the heat seal layer of both films is coated with the EVA Heat seal Dispersion or the Ionomer Heat seal Dispersion listed in Table 2. In some cases, part of the heat seal layer of one film is coated with a dispersion, and the heat seal layer of the other film is uncoated. In some cases, both films are uncoated. The EVA Heat seal Dispersion is applied at a rate of 3-6 g/m², and the Ionomer Heat seal Dispersion is applied at a rate of 2.6 g/m². Each coating is dried at a drying temperature of 65°C-75°C before proceeding to the heat seal step.
- As shown in Table 3, heat seals are made in the coated and the uncoated portions of the films at temperatures of 110°C, 120°C, 130°C and 140°C and pressure of 4 bar (400 kPa). The lamination speed is from 10 to 20 m/min.
15 mm wide samples from each heat seal are cut and tested for seal strength according to the Test Methods. Samples 1-4 show that the uncoated heat seal films form infrangible seals under any of the testing conditions. Samples 5-20 show that frangible seals can be made (under the same conditions that make infrangible seals in Samples 1-4), with proper selection of the second heat seal polymer, the corona treatment, the coating of one or both films to be heat sealed, and the temperature used to form the heat seals.

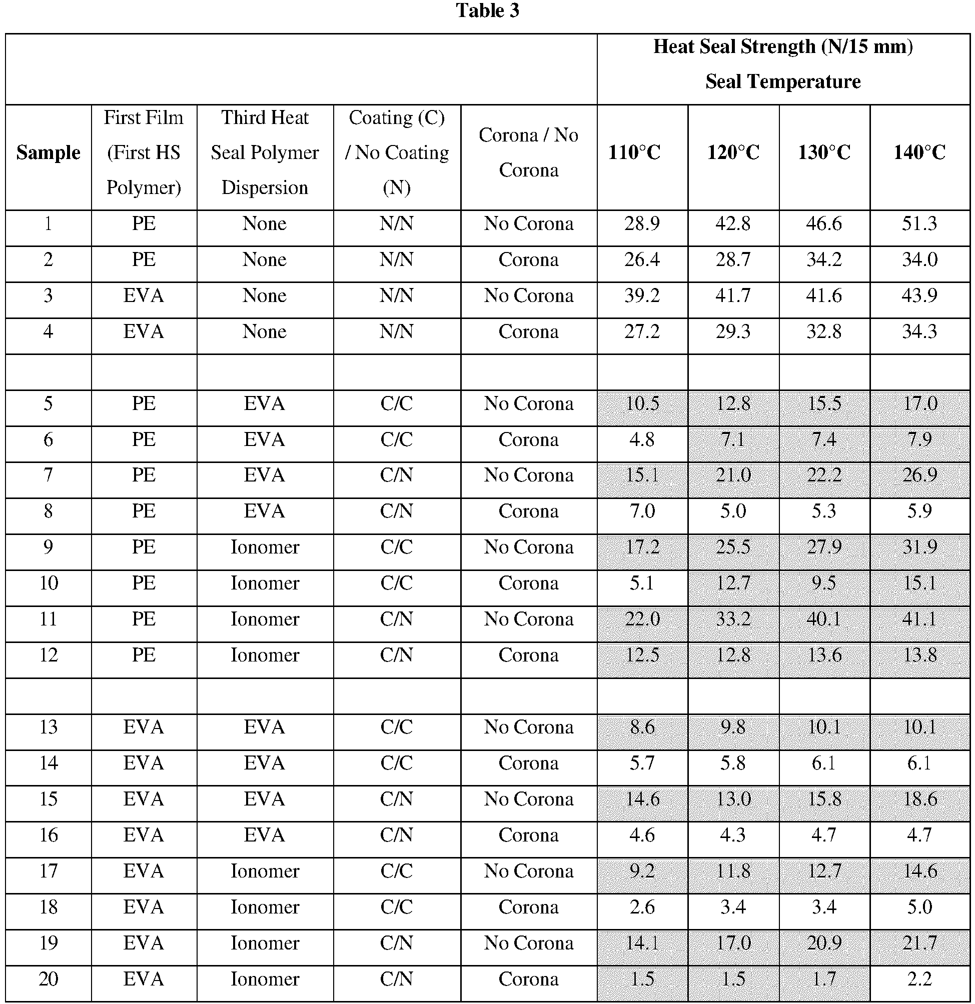

Samples 1-4 show infrangible seals. In Samples 5 to 20, unhighlighted results are frangible seals and examples of the invention, whereas highlighted results are comparative seals that are too strong or too weak to be useful as frangible seals.

## Claims

1. A bag having an inside and outside and a first seal and a second seal, wherein the bag comprises a first film and a second film, wherein the first film comprises a first heat seal layer and the second film comprises a second heat seal layer on the inside of the bag; the first heat seal layer comprises a first heat seal polymer and the second heat seal layer comprises a second heat seal polymer; and wherein part of the first heat seal layer and second heat seal layer are sealed for the first seal having a heat seal strength of at least 20 N/15 mm; and wherein a third heat seal polymer is on the inside of the bag between the first film and second film for the second seal having a heat seal strength from 2 N/15 mm to 7 N/15 mm.

2. The bag of claim 1, wherein the first heat seal polymer and the second heat seal polymer each have a seal initiation temperature from 105°C to 150°C.

3. The bag of any one of the preceding claims, wherein the first heat seal polymer comprises a linear low-density polyethylene or a polyolefin plastomer.

4. The bag of any one of the preceding claims, wherein the third heat seal polymer comprises an ethylene vinyl acetate copolymer.

5. The bag of any one of the preceding claims, wherein the third heat seal polymer comprises ionomer.

6. The bag of any one of the preceding claims, wherein the first heat seal polymer comprises an ethylene vinyl acetate copolymer.

7. The bag of any one of the preceding claims, wherein the first heat seal polymer comprises an ionomer.

8. The bag of any one of the preceding claims, wherein the first seal has a seal strength from 24 N/15 mm to 50 N/15 mm and the second seal has a strength from 2.5 N/15 mm to 6.5 N/15 mm.

9. The bag of any one of the preceding claims, wherein the second seal has a heat seal strength that is from 10 percent to 30 percent of the heat seal strength of the first seal.

10. A bag having an inside and outside and a first seal and a second seal, wherein the bag comprises a first film, wherein the film comprises a first heat seal layer comprising a first heat seal polymer; wherein part of the first heat seal layer is sealed to itself for the first seal having a heat seal strength of at least 20 N/15 mm; and wherein a third heat seal polymer is on the inside of the bag and the first heat seal layer for the second seal having a heat seal strength from 2 N/15 mm to 7 N/15 mm.

11. A process to make a bag comprising:
(a) providing a first heat seal film comprising a first heat seal layer comprising a first heat seal polymer and a second heat seal film comprising a second heat seal layer comprising a second heat seal polymer;
(b) coating a section of the first heat seal layer and/or the second heat seal layer with a dispersion of a third heat seal polymer;
(c) pressing an uncoated section of the first heat seal layer and/or the second heat seal layer for a selected heat and pressure for a selected time to form a first seal between the films having a heat seal strength of at least 20 N/15 mm; and
(d) pressing the section of the first heat seal layer and/or the second heat seal layer with the dispersion to form a second seal having a heat seal strength at least 2 N/15 to at most 7 N/15 mm.

12. The process of claim 11, wherein both the first seal and the second seal are formed by selecting a temperature from 80°C to 150°C and a pressure from 150 kPa to 750 kPa for a time from 0.2 seconds to 2 seconds.

13. The process of claim 12, wherein the selected temperature used to form the second seal is no more than 5°C different from the selected temperature used to form the first seal, the selected pressure used to form the first seal is no more than 20 percent different from the selected pressure used to form the second seal, and the selected time that heat and pressure are applied to form the first seal is no more than 20 percent different from the selected time that heat and pressure are applied to form the second seal.

14. The process of claim 12, wherein only the heat seal layer on the first film is coated with the third heat seal polymer in step (b).

15. The process of claim 12, wherein the heat seal layers on both the first and the second film are coated with the third heat seal polymer in step (b).
